# EUROPÄISCHE PATENTSCHRIFT

(11) **EP 1 570 137 B1**
(45) Veröffentlichungstag und Bekanntmachung des Hinweises auf die Patenterteilung: **13.06.2007**
(21) Anmeldenummer: 03785773.7
(22) Anmeldetag: 09.12.2003
(51) Int. Cl.: E03C 1/10, F16K 15/06, F16K 47/02

(54) **SANITAERES EINBAUTEIL**
SANITARY FITTING
PIECE SANITAIRE ENCASTREE

(30) Priorität: 10.12.2002 DE 10257518
(43) Veröffentlichungstag der Anmeldung: 07.09.2005
(73) Patentinhaber: Neoperl GmbH, 79379 Müllheim (DE)
(72) Erfinder: FANGMEIER, Martin, 79424 Auggen (DE); WEIS, Christoph, 79379 Mühllheim (DE)
(74) Vertreter: Maucher, Wolfgang
(86) Internationale Anmeldenummer: PCT/EP2003/013910
(87) Internationale Veröffentlichungsnummer: WO 2004/053243

(56) Entgegenhaltungen:
- WO-A-02/079678
- DE-A- 2 902 409
- DE-A- 3 644 272
- DE-A- 10 110 525
- DE-A- 19 834 902
- US-A- 5 494 069

## Beschreibung

Die Erfindung betrifft ein sanitäres Einbauteil mit einem mehrwandig ausgestalteten Einbaugehäuse, das in eine sanitäre Wasserleitung einsetzbar ist und zumindest zwei, einander benachbarte Gehäusewandungen hat, die zwischen sich einen Wandungsinnenraum umschließen.

Aus der DE 36 44 272 A1 kennt man bereits ein sanitäres Einbauteil der eingangs erwähnten Art, das als Geräuschdämpfungsvorrichtung für sanitäre Installationsleitungen vorgesehen ist. Das als Geräuschdämpfungsvorrichtung dienende vorbekannte Einbauteil soll sich Druckvibrationen und/oder akustischen Vibrationen widersetzen, die beim Hindurchströmen des Wassers hervorgerufen werden. Die vorbekannte Geräuschdämpfungsvorrichtung weist dazu eine zylindrische Buchse auf, die doppelwandig aus einem elastischen Material hergestellt ist und deren in Zylinder-Längsrichtung orientierte Buchsenöffnung für den Durchfluss der Flüssigkeit dient. Die beiden Gehäuse-Wandungen der Buchse begrenzen zwischen sich einen ringförmigen Wandungsinnenraum, der durch ein ringförmiges Abdichtelement abgedichtet ist. Die vorbekannte Geräuschdämpfungsvorrichtung kann in eine stirnendseitige und in ihrem lichten Querschnitt erweiterte Aufnahmehöhlung eines Leitungsabschnittes eingeschoben werden, bis das auch zur Positionierung und Halterung der Buchse in der Leitung bestimmte Abdichtelement ein weiteres Einschieben der Buchse begrenzt. Das vorbekannte Einbauteil ist billig herzustellen und leicht zu montieren, - seine Funktion ist jedoch auf die einer Geräuschdämpfungsvorrichtung begrenzt.

Vergleichbare Geräuschdämpfungsvorrichtungen sind auch aus der DE 33 00 500 A1, der DE 26 57 504 A1, der DE 25 21 837 A1 und der DE 20 64 002 A vorbekannt.

Man hat auch bereits Einbauteile geschaffen, die als Rückflussverhinderer, Strahlregler oder Durchflussmengenregler dienen. Auch bei einem beispielsweise als Rückflussverhinderer ausgestalteten Einbauteil kann es zu einer unerwünschten Geräuschbildung kommen, die sich über die Wasserleitung anschließend im gesamten Gebäude störend bemerkbar macht. Bei einem als Rückflussverhinderer ausgestalteten Einbauteil besteht zusätzlich das Problem, dass ein sich in Schließstellung auf der Abströmseite eines solchen Rückflussverhinderers eventuell aufbauender Überdruck auch auf diesen Rückflussverhinderer schädigend auswirken kann.

Aus der DE 198 34 902 A1 ist ein Kugel-Rückschlagventil mit einem Gehäuse bekannt. Das Gehäuse des vorbekannten Kugel-Rückschlagventils ist doppelwandig ausgestaltet, wobei die innere Gehäusewandung als eine aus flexiblem und/oder elastischem Material bestehende Membran ausgebildet ist. Die Gehäusewandungen umgrenzen einen Gehäuse-Innenraum, der der Druckstoßdämpfung dient und der über ein Ventil mit Gas oder einem gashaltigen Fluid befüllt werden kann. Die als Membran dienende Gehäusewandung des vorbekannten Kugel-Rückschlagventils unterteilt dessen Gehäuse in zwei Bereiche, nämlich den vom Fluid durchfließbaren Raum sowie in einen Druckstoß-Dämpfungsraum. Ein auftretender Druckstoß kann somit über die Membran auf den Druckstoß-Dämpfungsraum übertragen und durch das in diesem Raum vorhandene Medium gedämpft werden.

Es besteht die Aufgabe, ein sanitäres Einbauteil der eingangs erwähnten Art zu schaffen, das sich durch seine vielseitige und funktionssichere Betriebsweise auszeichnet.

Die erfindungsgemäße Lösung dieser Aufgabe besteht bei dem sanitären Einbauteil der eingangs erwähnten Art insbesondere in den Merkmalen des geltenden Patentanspruchs 1.

Das erfindungsgemäße Einbauteil ist als Rückflussverhinderer ausgebildet, der ein mehrwandiges Einbaugehäuse hat. Dieses Einbaugehäuse weist zumindest zwei einander benachbarte Gehäusewandungen auf, die zwischen sich einen Wandungsinnenraum umschließen. Dieser Wandungsinnenraum wird zwischen einer vergleichsweise formstabilen Innenwandung und einer demgegenüber aus flexiblem und/oder elastischem Material bestehenden Gehäuse-Außenwand umschlossen. Dabei ist die flexible und/oder elastische Gehäuse-Außenwand zum Druckausgleich bei geschlossenem Rückflussverhinderer und einem abströmseitig abgeschlossenen Fluidvolumen unter Komprimierung des zumindest einen Wandungsinnenraums gegen die benachbarte Gehäusewandung bewegbar oder unter Aufweiten des zumindest einen Wandungsinnenraums von der benachbarten Gehäusewandung auf Abstand bringbar oder wegbewegbar.

Da bei dem erfindungsgemäßen Einbauteil die radial äußere Gehäusewandung aus flexiblem und/oder elastischem Material hergestellt ist, kann das erfindungsgemäß ausgestaltete Einbauteil flüssigkeitsdicht in eine sanitäre Wasserleitung eingesetzt werden.

Der Einsatz solcher Rückflussverhinderer im Bereich von Thermostatmischern bringt nämlich häufig das Problem mit sich, dass das Wasser, das beim Absperren der Kaltwasser- oder Warmwasserseite zwischen dem geschlossenen Rückschlagventil einerseits und dem ebenfalls geschlossenen Ventilsitz andererseits eingeschlossen ist, durch äußere Einflüsse stark aufgeheizt wird, bis Systemdrücke entstehen, die zu Beschädigungen am schwächsten Teil der Versorgungsleitung und somit häufig am Rückflussverhinderer führen. Dies kann letztlich ein Verschluss der Versorgungsleitung oder einen ebenfalls unerwünschten Kreuzfluss zur Folge haben. Bei dem als Rückflussverhinderer ausgestalteten erfindungsgemäßen Einbauteil ist nun die Gehäuse-Außenwandung zum Druckausgleich bei geschlossenem Rückflussverhinderer und einem abströmseitig abgeschlossenen Fluidvolumen entweder derart gegen die benachbarte Gehäusewandung bewegbar, dass der als Druckausgleichsvolumen zur Verfügung stehende Wandungsinnenraum komprimiert wird, oder kann unter Aufweiten des zumindest einen Wandungsinnenraums von der benachbarten Gehäusewandung derart auf Abstand gebracht werden, dass der Wandungsinnenraum -zumindest einen Teil des abströmseitig abgeschlossenen Fluidvolumens in sich aufnehmen kann. Das Druckausgleichsvolumen dieses Wandungsinnenraums ist durch die Abmessungen des Wandungsinnenraums beziehungsweise des Rückflussverhinderers variierbar. Dabei kann das erfindungsgemäße Einbauteil wiederholt einen Druckausgleich bewirken, ohne dass eine Schädigung der Gehäuse-Außenwandung und ein entsprechender Funktionsverlust zu befürchten sind. Das als Rückflussverhinderer ausgestaltete erfindungsgemäße Einbauteil ist somit nicht nur wirkungsvoll gegen einen Überdruck gesichert, - vielmehr kann sein Wandungsinnenraum - insbesondere wenn dieser durch das abströmseitig abgeschlossene Fluidvolumen komprimierbar ist - gleichzeitig zur Geräusch- und Schalldämmung dienen. Der zwischen den einander benachbarten Gehäusewandungen umschlossene Wandungsinnenraum vermag einer Geräuschübertragung funktionssicher und wirkungsvoll entgegenzuwirken und Druckschläge abzumindern.

Dabei ist es besonders vorteilhaft, wenn der zumindest eine Wandungsinnenraum mit Luft oder dergleichen schalldämmendem Medium befüllbar ist.

Zweckmäßig ist es, wenn die elastische Gehäuse-Außenwandung zumindest an ihrem zuströmseitigen Stirnende einen Ring- oder Dichtwulst aufweist. Dieser Ring- oder Dichtwulst kann als gummiringartiges Befestigungsmittel und/oder als Dichtring dienen.

So ist nach einem weiterbildenden Vorschlag gemäss der Erfindung vorgesehen, dass zumindest ein Ringwulst der Gehäuse-Außenwandung zwischen dem Einbaugehäuse und der Wasserleitung flüssigkeitsdicht abdichtet.

Zusätzlich oder statt dessen kann es vorteilhaft sein, wenn zumindest ein Ringwulst der Gehäuse-Außenwandung gummiringartig in einer Nut der benachbarten Gehäusewandung gehalten ist. Dabei kann der Ringwulst auch eine schlauchförmige Gehäuse-Außenwand sicher und fest an der dazu benachbarten Gehäusewandung halten.

Eine bevorzugte Ausführungsform gemäss der Erfindung sieht vor, dass der abströmseitige Stirnendbereich der schlauchförmigen Gehäuse-Außenwandung auf wenigstens einem Gehäuseabsatz des Einbaugehäuses anliegt.

Um zum Druckausgleich das vollständige Volumen des zumindest einen Wandungsinnenraums zur Verfügung stellen zu können, ist es vorteilhaft, wenn der zumindest eine Wandungsinnenraum über wenigstens einen Ausgleichskanal mit der Zuströmseite des Einbauteiles verbunden ist.

Damit ein im geschlossenen Rückflussverhinderer eventuell auftretender Überdruck die Gehäuse-Außenwandung rasch und ohne zeitliche Verzögerungen gegen die benachbarte Gehäusewandung bewegen und pressen kann, ist es vorteilhaft, wenn das Einbauteil zumindest einen mit der Abströmseite des Einbauteiles verbundenen Druckausgleichs- oder Zuströmkanal hat, der zwischen der Gehäuse-Außenwandung und der Wasserleitung mündet.

Eine bevorzugte und besonders dauerhafte Ausführungsform gemäß der Erfindung sieht vor, dass die schlauchförmige Gehäusewandung aus einem Elastomer, insbesondere aus Silikon hergestellt ist.

Weitere Merkmale der Erfindung ergeben sich aus der folgenden Beschreibung erfindungsgemäßer Ausführungsbeispiele in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: einen hälftig dargestellten Rückflussverhinderer in der Schließstellung seines Ventilkörpers,
- Fig. 2: einen mit Figur 1 vergleichbaren, ebenfalls hälftig dargestellten Rückflussverhinderer in der Offenstellung seines Ventilkörpers,
- Fig. 3: einen hälftig dargestellten Rückflußverhinderer in der Schließstellung seines Ventilkörpers, wobei der in Figur 3 dargestellte Rückflußverhinderer eine Gehäuse-Außenwandung hat, die durch ein abströmseitig abgeschlossenes Fluidvolumen aufweitbar ist, und
- Fig. 4: einen mit Figur 3 vergleichbaren, ebenfalls hälftig dargestellten Rückflußverhinderer in der Offenstellung seines Ventilkörpers.

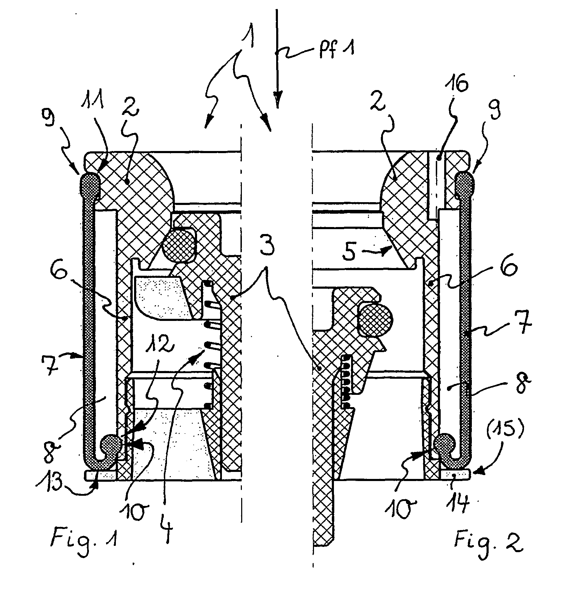

In den Figuren 1 bis 4 ist ein sanitäres Einbauteil 1 in verschiedenen Ausführungen dargestellt. Das Einbauteil 1 weist ein Einbaugehäuse 2 auf, das in eine sanitäre Wasserleitung einsetzbar und in seinem Gehäusedurchmesser an den lichten Aufnahmequerschnitt der Wasserleitung angepasst ist.

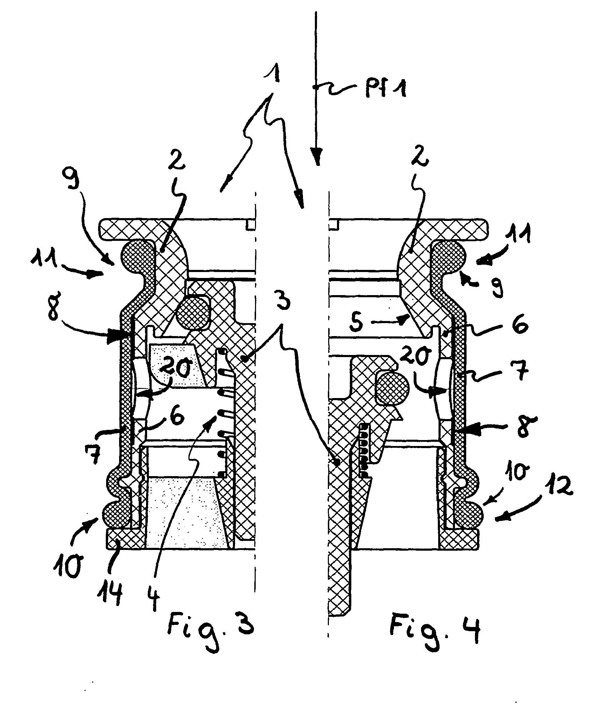

Aus den Figuren 1 bis 4 wird deutlich, dass das sanitäre Einbauteil 1 hier als Rückflussverhinderer ausgestaltet ist. Der Rückflussverhinderer 1 weist einen Ventilkörper 3 auf, der im Einbaugehäuse 2 verschieblich geführt ist. Der Ventilkörper 3 wird durch den Druck des in Durchflussrichtung Pf1 zuströmenden Fluids von der in Figur 1 beziehungsweise Figur 3 gezeigten Schließstellung gegen die Kraft einer Rückstellfeder 4 in die in Figur 2 beziehungsweise Figur 4 dargestellte Offenstellung bewegt. Bei einem Rückfluss entgegen der Durchströmrichtung Pf1 wird der Ventilkörper 3 gegen einen Ventilsitz 5 gepresst, so dass eine Rückströmung über den Rückflussverhinderer 1 hinaus entgegen der Durchströmrichtung Pf1 wirkungsvoll verhindert wird.

Um einen, den Rückflussverhinderer 1 eventuell schädigenden Überdruck abzubauen, ist das Einbaugehäuse 2 mehrwandig ausgestaltet. Es weist zumindest zwei einander benachbarte Gehäusewandungen 6, 7 auf, die einen Wandungsinnenraum 8 umschließen. Dabei hat das Einbaugehäuse 2 eine Gehäuse-Außenwandung 7, die aus einem flexiblen und/oder elastischen Material, vorzugsweise aus Silikon, hergestellt und schlauchförmig ausgestaltet ist.

Diese schlauchförmige Gehäuse-Außenwandung 7 weist an ihren Stirnenden Ringwülste 9, 10 auf. Dabei ist der zuströmseitige Ringwulst 9 am Einbaugehäuse 2 des in den Figuren 1 und 2 dargestellten Einbauteiles 1 so befestigt, dass dieser Ringwulst 9 zwischen dem Einbaugehäuse 2 und der Wasserleitung flüssigkeitsdicht abdichtet.

In den Figuren 1 bis 4 ist erkennbar, dass die Ringwülste 9, 10 gummiringartig in jeweils einer Nut 11, 12 der benachbarten Gehäusewandung 6 gehalten sind. Dabei liegt der abströmseitige Stirnendbereich der schlauchförmigen Gehäuse-Außenwandung 7 auf wenigstens einem flanschartigen Gehäuseabsatz 14 des Einbaugehäuses 2 an.

Aus den Figuren 1 und 2 ist zu entnehmen, dass die flexible Gehäuse-Außenwandung 7 zum Druckausgleich bei geschlossenem Rückflussverhinderer 1 und einem abströmseitig abgeschlossenen Fluidvolumen unter Komprimierung des Wandungsinnenraums 8 gegen die benachbarte Gehäusewandung 6 bewegbar ist. Bei der in Figur 3 und 4 gezeigten bevorzugten Ausführungsform des Einbauteiles 1 ist demgegenüber vorgesehen, dass ein abströmseitig abgeschlossenes Fluidvolumen durch eine Durchtrittsöffnung 20 oder einen Durchtrittskanal derart in den Wandungsinnenraum 8 einströmen kann, dass sich der Wandungsinnenraum 8 aufweitet und die elastische Gehäuse-Außenwandung 7 von der benachbarten Gehäusewandung 6 auf Abstand bewegt. Bei dem in Figur 3 und 4 dargestellten Rückflußverhinderer 1 liegt die als Silikonhülle ausgestaltete Gehäusewandung 7 eng an der Gehäuse-Innenwand 6 des Einbaugehäuses 2 an und behält diese, in den Figuren 3 und 4 gezeigte Vorzugsstellung im normalen Betrieb immer aufrecht. Nur bei großem Rückdruck wird die elastische Gehäusewandung 7 derart aufgeweitet, bis sie an der hier nicht dargestellten benachbarten Wandung der Wasserleitung anliegt und somit ein Puffervolumen freigibt. Bei beiden beschriebenen Ausführungen steht das gesamte Volumen des Wandungsinnenraums 8 als Druckausgleichsvolumen zur Verfügung, um einen eventuell schädigenden Überdruck wirkungsvoll abbauen zu können.

Nach dem Einsetzen des in Figur 1 dargestellten Einbaugehäuses 2 in eine sanitäre Wasserleitung wird der Wandungsinnenraum 8 regelmäßig noch mit Luft befüllt sein. Dabei wirkt insbesondere der mit Luft befüllte Wandungsinnenraum 8 des in den Figuren 1 und 2 gezeigten Anbauteiles 1 als Geräusch- und Schalldämmung, die einer Übertragung der beim Durchströmen des Rückflussverhinderers 1 auftretenden oder anderswo indizierten Störgeräusche auf die Wasserleitung wirkungsvoll entgegenwirkt.

Der in den Figuren 1 bis 4 dargestellte Rückflussverhinderer 1 zeichnet sich durch seine vielseitige und funktionssichere Betriebsweise aus. Das in Figur 2 dargestellte Ausführungsbeispiel des Rückflussverhinderers 1 weist einen Ausgleichskanal 16 auf, der den Wandungsinnenraum 8 mit der Zuströmseite des Einbauteiles verbindet. Bei geschlossenem Rückflussverhinderer 1 und auf die Gehäuse-Außenwandung 7 einwirkendem Überdruck kann somit der Wandungsinnenraum 8 rasch verkleinert werden.

Soll bei dem in den Figuren 1 und 2 gezeigten Einbauteil 1 die geräusch- und schalldämmende Wirkung eines insbesondere mit Luft befüllten Wandungsinnenraums 8 auch nach wiederholtem Druckausgleich des Rückflussverhinderers 1 sichergestellt werden, kann es zweckmäßig sein, wenn der Wandungsinnenraum 8 - wie in Figur 1 dargestellt - weitestgehend flüssigkeits- und luftdicht abgeschlossen ist. Im Gegensatz zu dem in Figur 2 dargestellten Ausführungsbeispieles weist der in Figur 1 gezeigte Rückflussverhinderer daher keinen Ausgleichskanal 16 auf.

Damit bei geschlossenem Rückflussverhinderer 1 und einem abströmseitig abgeschlossenen Fluidvolumen der auf der Abströmseite eventuell entstehende Überdruck rasch abgebaut werden kann, weisen die in den Figuren 1 und 2 gezeigten Ausführungsbeispiele des Rückflussverhinderers 1 zumindest einen mit der Abströmseite des Einbauteiles verbundenen Druckausgleichs- oder Zuströmkanal 15 auf, der zwischen der Gehäuse-Außenwandung und der Wasserleitung mündet. Dieser Druckausgleichs- und Zuströmkanal 15 wird hier durch Schlitze gebildet, die zwischen den benachbarten Gehäuseabsätzen 14 des Einbaugehäuses 2 angeordnet sind.

## Patentansprüche

1. Sanitäres Einbauteil (1), das als Rückflußverhinderer ausgebildet ist und ein mehrwandig ausgestaltetes Einbaugehäuse (2) hat, welches in eine sanitäre Wasserleitung einsetzbar ist und zumindest zwei einander benachbarte Gehäusewandungen (6, 7) aufweist, die zwischen sich einen Wandungsinnenraum (8) umschließen, und von denen eine Gehäusewandung (7) aus einem flexiblen und/oder elastischen Material hergestellt und schlauchförmig ausgebildet ist, wobei die elastische Gehäusewandung (7) zum Druckausgleich bei geschlossenem Rückflussverhinderer (1) und einem abströmseitig abgeschlossenen Fluidvolumen unter Komprimierung des zumindest einen-Wandungsinnenraums (8) gegen die benachbarte Gehäusewandung (6) bewegbar ist oder unter Aufweiten des zumindest einen Wandungsinnenraums (8) von der benachbarten Gehäusewandung (6) auf Abstand bringbar oder wegbewegbar ist, wobei die äußere Gehäusewandung (7) als flexible und/oder elastische Gehäusewandung ausgebildet ist, und wobei die elastische Gehäusewandung (7) durch ein die elastische Gehäusewandung (7) außenseitig beaufschlagendes und den Wandungsinnenraum komprimierendes Fluidvolumen oder mittels eines unter Aufweiten des Wandungsinnenraums (8) durch wenigstens einen Durchtrittskanal oder mindestens eine Durchtrittsöffnung (20) in diesen einströmenden Fluidvolumens bewegbar ist.

2. Einbauteil nach Anspruch 1, **dadurch gekennzeichnet, dass** der zumindest eine Wandungsinnenraum (8) mit Luft oder dergleichen schalldämmendem Medium befüllbar ist.

3. Einbauteil nach einem der Ansprüche 1 oder 2, **dadurch gekennzeichnet**, die elastische Gehäusewandung (7) zumindest an ihrem zuströmseitigen Stirnende einen Ring- oder Dichtwulst (9, 10) aufweist.

4. Einbauteil nach einem der Ansprüche 1 bis 3, **dadurch gekennzeichnet, dass** zumindest ein Ringwulst (9) der Gehäuse-Außenwand zwischen dem Einbaugehäuse (2) und der Wasserleitung flüssigkeitsdicht abdichtet.

5. Einbauteil nach einem der Ansprüche 1 bis 4, **dadurch gekennzeichnet, dass** zumindest ein Ringwulst (9, 10) der Gehäuse-Außenwandung (7) gummiringartig in einer Nut (11, 12) der benachbarten Gehäusewandung (6) gehalten ist,

6. Einbauteil nach einem der Ansprüche 1 bis 5, **dadurch gekennzeichnet, dass** der abströmseitige Stirnendbereich der schlauchförmigen Gehäuse-Außenwandung (7) auf wenigstens einem Gehäuseabsatz (14) des Einbaugehäuses anliegt.

7. Einbauteil nach einem der Ansprüche 1 bis 6, **dadurch gekennzeichnet, dass** der zumindest eine Wandungsinnenraum (8) über wenigstens einen Ausgleichskanal (16) mit der Zuströmseite des Einbauteiles (1) verbunden ist.

8. Einbauteil nach einem der Ansprüche 1 bis 7, **dadurch gekennzeichnet, dass** das Einbauteil (1) zumindest einen mit der Abströmseite des Einbauteiles (1) verbundenen Druckausgleichs- oder Zuströmkanal (15) hat, der zwischen der Gehäuse-Außenwandung (7) und der Wasserleitung mündet.

9. Einbauteil nach einem der Ansprüche 1 bis 8, **dadurch gekennzeichnet, dass** die schlauchförmige Gehäuse-Außenwandung (7) aus einem Elastomer, insbesondere aus Silikon, hergestellt ist.

## Claims

1. Sanitary insert (1) which is constructed as a backflow preventer and has a multi-walled installation housing (2) which can be inserted in a sanitary water pipe and comprises at least two adjacent housing walls (6, 7) which enclose between them a wall interstice (8), and one housing wall (7) of which is made from a flexible and/or elastic material and is of tubular construction, wherein in order to equalise the pressure when the backflow preventer (1) is closed off and a volume of fluid is shut off on the outflow side the elastic housing wall (7) is movable towards the adjacent housing wall (6), thereby compressing the at least one wall interstice (8), or can be distanced from or moved away from the adjacent housing wall (6), thereby expanding the at least one wall interstice (8), the outer housing wall (7) being constructed as a flexible and/or elastic housing wall, and the elastic housing wall (7) being movable by a volume of fluid that acts on the exterior of the elastic housing wall (7) and compresses the wall interstice, or by means of a volume of fluid that flows through at least one through-channel, expanding the wall interstice (8), or through at least one through-opening (20) into the latter.

2. Insert according to claim 1, **characterised in that** the at least one wall interstice (8) can be filled with air or a similar soundproofing medium.

3. Insert according to one of claims 1 or 2, **characterised in that** the elastic housing wall (7) comprises an annular bead or sealing bead (9, 10) at least on its end face on the inflow side.

4. Insert according to one of claims 1 to 3, **characterised in that** at least one annular bead (9) of the exterior housing wall forms a fluidtight seal between the installation housing (2) and the water pipe.

5. Insert according to one of claims 1 to 4, **characterised in that** at least one annular bead (9, 10) of the exterior housing wall (7) is held in the manner of a rubber ring in a groove (11, 12) in the adjacent housing wall (6).

6. Insert according to one of claims 1 to 5, **characterised in that** the end face region of the tubular exterior housing wall (7) on the outflow side abuts on at least one housing projection (14) of the installation housing.

7. Insert according to one of claims 1 to 6, **characterised in that** the at least one wall interstice (8) is connected to the inflow side of the insert (1) through at least one equalisation channel (16).

8. Insert according to one of claims 1 to 7, **characterised in that** the insert (1) has at least one pressure equalisation or inflow channel (15) connected to the outflow side of the insert (1), which opens out between the exterior housing wall (7) and the water pipe.

9. Insert according to one of claims 1 to 8, **characterised in that** the tubular exterior housing wall (7) is made from an elastomer, particularly silicon.

## Revendications

1. Élément sanitaire à encastrer (1), qui est réalisé sous la forme d'un clapet de non-retour et comporte un boîtier à encastrer (2) muni de plusieurs parois, qui peut être inséré dans une conduite d'eau sanitaire et qui comporte au moins deux parois (6, 7) adjacentes l'une à l'autre, qui délimitent entre elles un espace intérieur (8) et parmi lesquelles une paroi (7) est réalisée dans un matériau flexible et/ou élastique et est conçue sous forme de tuyau flexible, sachant que, pour un équilibrage de la pression lorsque le clapet de non-retour (1) est fermé et que le volume de fluide est obturé du côté sortie, la paroi élastique (7) est apte à se déplacer contre la paroi (6) adjacente sous l'effet de la compression dudit au moins un espace intérieur (8) ou est apte à être amenée à distance ou éloignée de la paroi (6) adjacente sous l'effet de la dilatation dudit au moins un espace intérieur (8), la paroi extérieure (7) du boîtier étant réalisée sous forme de paroi flexible et/ou élastique et la paroi élastique (7) du boîtier pouvant être déplacée par un volume de fluide sollicitant de l'extérieur la paroi élastique (7) et comprimant l'espace intérieur entre les parois ou au moyen d'un volume de fluide affluant à travers au moins un conduit de passage ou au moins un orifice de passage (20) dans l'espace intérieur (8) sous l'effet de la dilation de ce dernier.

2. Élément à encastrer selon la revendication 1, **caractérisé en ce que** ledit au moins un espace intérieur (8) peut être rempli d'air ou d'un fluide similaire atténuant les bruits.

3. Élément à encastrer selon la revendication 1 ou 2, **caractérisé en ce que** la paroi élastique (7) du boîtier, au moins sur son extrémité frontale du côté entrée, comporte un bourrelet annulaire ou bourrelet d'étanchéité (9, 10).

4. Élément à encastrer selon l'une quelconque des revendications 1 à 3, **caractérisé en ce qu'**au moins un bourrelet annulaire (9) de la paroi extérieure du boîtier assure l'étanchéité par rapport aux liquides entre le boîtier encastré (2) et la conduite d'eau.

5. Élément à encastrer selon l'une quelconque des revendications 1 à 4, **caractérisé en ce qu'**au moins un bourrelet annulaire (9, 10) de la paroi extérieure (7) du boîtier est maintenu à la manière d'une bague en caoutchouc dans une rainure (11, 12) de la paroi (6) adjacente du boîtier.

6. Élément à encastrer selon l'une quelconque des revendications 1 à 5, **caractérisé en ce que** l'extrémité frontale du côté sortie de la paroi extérieure (7) en forme de tuyau flexible est en appui sur au moins une saillie (14) du boîtier encastré.

7. Élément à encastrer selon l'une quelconque des revendications 1 à 6, **caractérisé en ce que** ledit au moins un espace intérieur (8) est relié au côté entrée de l'élément à encastrer (1) par l'intermédiaire d'au moins un conduit d'équilibrage (16).

8. Élément à encastrer selon l'une quelconque des revendications 1 à 7, **caractérisé en ce que** l'élément à encastrer (1) comporte au moins un conduit d'équilibrage de pression ou conduit d'admission (15) qui est relié au côté sortie de l'élément à encastrer (1) et qui débouche entre la paroi extérieure (7) du boîtier et la conduite d'eau.

9. Élément à encastrer selon l'une quelconque des revendications 1 à 8, **caractérisé en ce que** la paroi extérieure (7) en forme de tuyau flexible est réalisée dans un élastomère, en particulier en silicone.
